(19) Europäisches Patentamt
European Patent Office
Office européen des brevets

(11) **EP 4 763 936 A1**

(12) **EUROPEAN PATENT APPLICATION**
published in accordance with Art. 153(4) EPC

(43) Date of publication:
**24.06.2026 Bulletin 2026/26**

(21) Application number: **24908184.5**

(22) Date of filing: **20.12.2024**

(51) International Patent Classification (IPC):
*C09J 7/38* (2018.01)    *C09J 7/24* (2018.01)
*C09J 107/00* (2006.01)    *H01M 50/595* (2021.01)
*H01M 50/105* (2021.01)    *H01M 10/052* (2010.01)

(52) Cooperative Patent Classification (CPC):
**C09J 7/24; C09J 7/38; C09J 107/00; H01M 10/052; H01M 50/105; H01M 50/595;** Y02E 60/10

(86) International application number:
**PCT/KR2024/020860**

(87) International publication number:
**WO 2025/135902 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 KR 20230190231**

(71) Applicant: **LG Energy Solution, Ltd.**
**Seoul 07335 (KR)**

(72) Inventors:
• **SONG, Dae Woong**
  **Daejeon 34122 (KR)**
• **HWANG, Soo Ji**
  **Daejeon 34122 (KR)**
• **KANG, Min Hyeong**
  **Daejeon 34122 (KR)**
• **YU, Hyung Kyun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ADHESIVE FILM FOR SECONDARY BATTERY AND LITHIUM SECONDARY BATTERY COMPRISING SAME**

(57)    The present invention relates to an adhesive film for a secondary battery, wherein the adhesive film includes an outer insulation layer, and an adhesive layer positioned on one surface of the outer insulation layer, wherein the adhesive layer has a contact angle of 100° or more, and the adhesive layer has a wetting tension of less than 30 mN/m.

[FIG. 1]

10

EP 4 763 936 A1

**Description**

**TECHNICAL FIELD**

**Cross-reference to Related Applications**

This application claims the benefit of Korean Patent Application No. 10-2023-0190231, filed on December 22, 2023, in the Korean Intellectual Property Office, the disclosure of which is incorporated herein in its entirety by reference.

**Technical Field**

The present invention relates to an adhesive film for a secondary battery and a lithium secondary battery including the adhesive film, and more particularly, to an adhesive film for a secondary battery having excellent electrolyte resistance and a lithium secondary battery including the adhesive film.

**BACKGROUND ART**

In general, types of a secondary battery include a nickel cadmium battery, a nickel hydrogen battery, a lithium ion battery, a lithium ion polymer battery, and the like. Such a secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

However, due to recent incidents of fires and explosions involving lithium secondary batteries, concerns about the safety of lithium secondary batteries have been growing. Particularly, as environments in which lithium secondary batteries are used become more diverse and extreme, securing the safety of lithium secondary batteries in high-temperature environments has become an important issue.

A lithium secondary battery is manufactured by a method of manufacturing an electrode assembly including a positive electrode, a negative electrode, and a separator, and then accommodating the electrode assembly in a battery case, injecting an electrolyte into the battery case, and then sealing the battery case. In this case, an adhesive film is used for fixing the electrode assembly accommodated in the battery case, protecting a welded portion between an electrode tab extending and protruding from each electrode plate of the electrode assembly and an electrode lead, or fixing a side folding of the sealed secondary battery.

However, if the lithium secondary battery to which the adhesive film is attached is continuously exposed to a high-temperature environment, the adhesive film in contact with an electrolyte solution may have reduced adhesive force, or the adhesive film may have a deformed external appearance. Accordingly, sealing properties of the battery case may be lowered, or the quality of may be degraded due to the deformation of external appearance, which may act as one of factors for degrading high-temperature safety of the lithium secondary battery.

**DISCLOSURE OF THE INVENTION**

**TECHNICAL PROBLEM**

In order to solve the above-described problems, the present invention is to provide an adhesive film for a secondary battery, wherein the adhesive film has improved electrolyte resistance, and thus, has excellent adhesive force even after being immersed in an electrolyte solution, and has suppressed external appearance deformation, and a lithium secondary battery having excellent high-temperature safety by including the adhesive film.

**TECHNICAL SOLUTION**

[1] The present invention provides an adhesive film for a secondary battery, wherein the adhesive film includes an outer insulation layer, and an adhesive layer positioned on one surface of the outer insulation layer, wherein the adhesive layer has a contact angle of 100° or more, and the adhesive layer has a wetting tension of less than 30 mN/m.

[2] In [1] above, the present invention provides an adhesive film for a secondary battery, wherein the adhesive layer includes a rubber-based resin.

[3] In [1] or [2] above, the present invention provides an adhesive film for a secondary battery, wherein the rubber-based resin is one or more selected from the group consisting of natural rubber, epoxidized natural rubber, polyisobutylene rubber, an epoxidized styrene block copolymer, ethylene propylene diene monomer rubber, and a styrene-ethylenebutylene-styrene copolymer.

[4] In [1] to [3] above, the present invention provides an adhesive film for a secondary battery, wherein the outer insulation layer is one or more selected from the group consisting of polyethylene terephthalate, polyethylene naphthalate, polyimide, casting polypropylene, high-density polyethylene, and low-density polyethylene.

[5] In at least one among [1] to [4] above, the present invention provides an adhesive film for a secondary battery, wherein the adhesive layer has adhesive force of 200 gf/25 mm or greater.

[6] In at least one among [1] to [5] above, the present invention provides an adhesive film for a secondary battery, wherein the adhesive layer has electrolyte resistance adhesive force of 100 gf/25 mm or greater.

[7] In at least one among [1] to [6] above, the present invention provides an adhesive film for a secondary battery, wherein the adhesive layer has an electrolyte resistance index of 3 or less, as defined by Equation 1 below.

$$\text{Electrolyte resistance index} = (\text{Adhesive force} \times 100°) / (\text{Electrolyte resistance adhesive force} \times \text{contact angle}) \qquad \text{[Equation 1]}$$

[8] The present invention provides a lithium secondary battery including an electrode assembly including a positive electrode, a negative electrode, and a separator, an electrode tab extending and protruding from each electrode plate of the electrode assembly, an electrode lead connected to the electrode tab by welding, the adhesive film for a secondary battery according to any one among [1] to [7] above, an electrolyte, and a battery case in which the electrode assembly and the electrolyte are accommodated.

[9] In [8] above, the present invention provides a lithium secondary battery, wherein the adhesive film for a secondary battery is positioned on a welded portion to which the electrode lead and the electrode tab are connected.

[10] In [8] above, the present invention provides a lithium secondary battery, wherein the adhesive film is positioned on an outer circumferential surface of the electrode assembly.

[11] In [8] above, the present invention provides a lithium secondary battery, wherein the adhesive film is positioned on a folded region of a sealing portion of the battery case.

[12] In at least one among [8] to [11] above, the present invention provides a lithium secondary battery, wherein the battery case is a pouch-type battery case.

## ADVANTAGEOUS EFFECTS

An adhesive film for a secondary battery according to the present invention includes an adhesive layer having a contact angle of 100° or more, and a wetting tension of less than 30 mN/m, and thus, has excellent electrolyte resistance, thereby not being swollen even when in contact with an electrolyte, and being capable of suppressing degradation in adhesive force, and accordingly, when applied to a lithium secondary battery, the adhesive film is prevented from being de-intercalated, which may improve safety, and may reduce appearance defects of a lithium secondary battery. Particularly, a lithium secondary battery including the adhesive film may have improved safety in a high-temperature environment.

## BRIEF DESCRIPTION OF THE DRAWINGS

FIG. 1 is a cross-sectional view showing a laminated state of an adhesive film according to an embodiment of the present invention.

FIG. 2 is an exploded assembly view of a lithium secondary battery, which does not illustrate an adhesive film for a secondary battery according to the present invention.

FIG. 3 is an exploded assembly view showing a lithium secondary battery according to an embodiment of the present invention.

FIG. 4 is an exploded assembly view showing a lithium secondary battery according to another embodiment of the present invention.

## BEST MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terms used herein are only used to describe exemplary embodiments, and are not intended to limit the present invention. Singular expressions include plural expressions unless the context clearly indicates otherwise.

In the present specification, it should be understood that the term, "include," "comprise," or "have" is intended to specify the presence of stated features, numbers, steps, elements, or combinations thereof, but do not preclude the presence or addition of one or more other features, numbers, steps, elements, or combinations thereof.

In the present invention, a "contact angle" refers to an angle including a water droplet among angles formed by a tangent line and an adhesive layer surface in a portion in which air, the water droplet, and the adhesive layer contact each other, when the water drop is dropped onto the adhesive layer of an adhesive film according to the present invention in the air, and specifically, an angle formed by an adhesive layer surface and the interface of a water droplet measured within 5 seconds after dropping one drop of distilled water onto the adhesive layer of an adhesive film according to the present invention at room temperature (25 °C) using Phoenix mt of SEO Co.

In the present invention, "adhesive force" refers to adhesive force when a surface opposite to a surface in contact with the outer insulation layer of the adhesive layer is pressed onto a SUS304 substrate by using a 2 kg roller, and then the adhesive film is peeled at a peeling rate of 300 mm/min and a peeling angle of 180° at 25 °C.

In the present invention, "wetting tension" refer to the maximum surface tension of a liquid which spreads without clumping on the surface of an adhesive layer, and has a unit of mN/m. The wetting tension may be measured according to a method in accordance with JIS K 6768:1999, and specifically, a solution is applied on the surface of an adhesive layer, and then a state in which the solution spreads or is formed on the surface is observed to measure, as the wetting tension of the adhesive layer, the highest surface tensile value of when the solution uniformly spreads for 2 seconds or more of the surface of the adhesive layer by using Phoenix mt of SEO Co.

In the present invention, "electrolyte resistance adhesive force" refers to adhesive force of an adhesive layer measured after immersing the adhesive film according to the present invention in an electrolyte, and specifically, the adhesive film cut to a size of 25 mm×150 mm is immersed in an electrolyte, and then stored at 60 °C for 24 hours, and the immersed adhesive film is taken out, and a surface opposite to a surface in contact with an outer insulation layer of the adhesive layer is pressed onto a SUS304 substrate by using a 2 kg roller, and then the adhesive film is peeled at a peeling rate of 300 mm/min and a peeling angle of 180° at 25 °C, at which time, adhesive force of the adhesive film may be measured using ASTM D 3330.

An adhesive film for a secondary battery and a lithium secondary battery according to the present invention include at least one of configurations disclosed below, and may include any combination of technically possible configurations among the following configurations.

Hereinafter, the present invention will be described in more detail.

## Adhesive film for secondary battery

An adhesive film for a secondary battery according to the present invention includes an outer insulation layer, and an adhesive layer positioned on one surface of the outer insulation layer, wherein the adhesive layer has a contact angle of 100° or more, and the adhesive layer has a wetting tension of less than 30 mN/m.

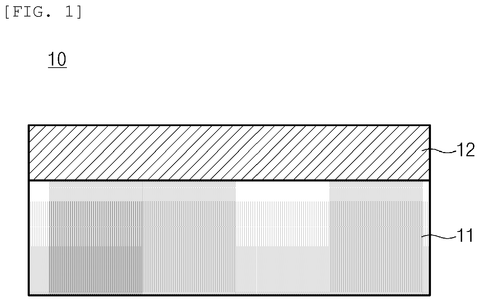

FIG. 1 is a cross-sectional view showing a laminated state of an adhesive film according to an embodiment of the present invention.

Referring to FIG. 1, an adhesive film 10 according to an embodiment of the present invention includes an outer insulation layer 11 and an adhesive layer 12 positioned on a first surface of the outer insulation layer 11.

The shape of the adhesive film may vary without limitation depending the purpose of use. For example, an adhesive film used to fix the shape of an electrode assembly may have a rectangular plate shape, but is not limited thereto, and may be used in various shapes such as a circular shape, a triangular shape, or an amorphous plate shape.

Next, the outer insulation layer and the adhesive layer constituting the adhesive film of the present invention will be described in more detail.

## (1) Outer insulation layer

The outer insulation layer according to the present invention may serve to perform a process of attaching an adhesive film to a secondary battery and to impart mechanical rigidity required to implement adhesive force of the adhesive film, and may serve to protect the adhesive layer. In this case, the outer insulation layer is a layer in the shape of a film or a sheet, and may have a shape such as a circular shape, a triangular shape, or an amorphous shape in addition to a quadrangular shape.

Accordingly, the outer insulation layer may be used without particular limitation as long as it imparts mechanical rigidity to the adhesive film, and protects the adhesive layer. For example, the outer insulation layer may include one or more selected from the group consisting of polyethylene terephthalate (PET), polyethylene naphthalate (PEN), polyimide (PI), casting polypropylene (CPP), high-density polyethylene (HDPE), and low-density polyethylene (LDPE).

Specifically, if the adhesive film is positioned on a welded portion to which an electrode lead of a secondary battery and an electrode tab thereof are connected, the outer insulation layer may preferably contain casting polypropylene. In this case, even if the outer insulation layer of the adhesive film is mixed and sealed during a process of sealing a pouch of a pouch-type secondary battery, since the outer insulation layer and a sealant layer of the pouch have similar components, problems of degradation in sealing strength and degradation in insulation properties may be insignificant.

Alternatively, if the adhesive film is positioned on an outer circumferential surface of an electrode assembly, or on a folded region of a sealing portion of a battery case, the outer insulation layer may preferably contain polyethylene terephthalate. In this case, the outer insulation layer has excellent mechanical rigidity and chemical resistance properties, so that the electrode assembly or the folded region of the sealing portion may be sufficiently fixed by the adhesive film.

However, the components of the outer insulation layer are not limited thereto.

Meanwhile, the outer insulation layer may have a thickness of 10 $\mu$m to 110 $\mu$m, preferably 15 $\mu$m to 105 $\mu$m, and more preferably 17 $\mu$m to 100 $\mu$m. If the above-described range is satisfied, the tensile strength of the outer insulation layer is sufficiently secured, so that the adhesive film is not easily broken during a roll-pressing process of attaching the adhesive film to a secondary battery, and the attachment process may be easily performed.

Alternatively, according to an embodiment of the present invention, if the adhesive film is positioned on a welded portion to which an electrode lead of a secondary battery and an electrode tab thereof are connected, the outer insulation layer may have a thickness of 30 $\mu$m to 110 $\mu$m, preferably 45 $\mu$m to 110 $\mu$m, and more preferably 60 $\mu$m to 100 $\mu$m. If the above-described range is satisfied, the adhesive film may sufficiently cover a bead generated in the welded portion, so that it is possible to prevent the sealant layer of the pouch film from being damaged by the bead.

According to another embodiment of the present invention, if the adhesive film is positioned on an outer circumferential surface of an electrode assembly of a secondary battery, the outer insulation layer may have a thickness of 10 $\mu$m to 50 $\mu$m, preferably 12 $\mu$m to 40 $\mu$m, and more preferably 15 $\mu$m to 30 $\mu$m. If the above-described range is satisfied, the adhesive film firmly fixes the electrode assembly, which may prevent short circuit of a positive electrode and a negative electrode, and may prevent damage to the electrode assembly caused by collision which occurs during a process.

According to yet another embodiment of the present invention, if the adhesive film is positioned on a folded region of a sealing portion of a battery case of a secondary battery, the outer insulation layer may have a thickness of 10 $\mu$m to 50 $\mu$m, preferably 12 $\mu$m to 40 $\mu$m, and more preferably 15 $\mu$m to 30 $\mu$m. When the above-described range is satisfied, the sealing portion is firmly fixed to be folded, which may improve the energy density of a secondary battery and a vent pressure of the sealing portion.

**(2) Adhesive layer**

An adhesive layer according to the present invention may be a layer serving to attach the adhesive film to an adherend.

The adhesive layer is positioned on one surface of the outer insulation layer. Specifically, the adhesive layer may be positioned on one or more surfaces of both surfaces of the outer insulation layer. In addition, the adhesive layer may have a single-layered or multi-layered structure.

The adhesive layer has a contact angle of 100° or more. Specifically, the adhesive layer may have a contact angle of 100° or more, 105° or more, 110° or more, 115° or more, or 120° or more, and may be 150° or less, 145° or less, 140° or less, 135° or less, 130° or less, 125° or less, or 120° or less. For example, the adhesive layer may have a contact angle of 100° or more, preferably 100° to 150°, more preferably 105° to 140°, and even more preferably 115° to 125°. If the contact angle satisfies the above-described range, the adhesive layer may have sufficient hydrophobic properties, and thus, even when in contact with an electrolyte, the adhesive layer may prevent the electrolyte from penetrating into the adhesive layer, and accordingly, it is possible to suppress a phenomenon in which the adhesive layer swells due to the electrolyte, prevent degradation in adhesive force of the adhesive layer, and contribute to improving the safety and appearance of a battery in a high-temperature situation.

The contact angle may be appropriately adjusted by the type of an adhesive included in the adhesive layer, the type and amount of an additive, the surface treatment such as plasma treatment, or the surface roughness of the adhesive layer.

The adhesive layer has a wetting tension of less than 30 mN/m. Specifically, the wetting tension of the adhesive layer may be less than 30 mN/m, 29.5 mN/m or less, 29 mN/m or less, 28.5 mN/m or less, 28 mN/m or less, 27.5 mN/m or less, 27 mN/m or less, 1 mN/m or greater, 2 mN/m or greater, 3 mN/m or greater, 4 mN/m or greater, 5 mN/m or greater, 6 mN/m or greater, 7 mN/m or greater, 8 mN/m or greater, 9 mN/m or greater, 10 mN/m or greater, 11 mN/m or greater, 12 mN/m or greater, 13 mN/m or greater, 14 mN/m or greater, 15 mN/m or greater, 16 mN/m or greater, 17 mN/m or greater, 18 mN/m or greater, 19 mN/m or greater, or 20 mN/m or greater. For example, the wetting tension of the adhesive layer may be less than 30 mN/m, 1 mN/m to less than 30 mN/m, 5 mN/m to 29 mN/m, 10 mN/m to 28 mN/m, or 20 mN/m to 27 mN/m.

When the above-described range is satisfied, the wetting of the adhesive layer is low, so that it may be difficult for the electrolyte to spread on or penetrate into the surface, and accordingly, a chemical reaction between the adhesive layer and the electrolyte may be suppressed, and deterioration of the adhesive layer or degradation in performance due to the decomposition of the electrolyte may be prevented. Therefore, even when in contact with the electrolyte, the adhesive layer may have excellent structural stability, which may improve electrolyte resistance, and accordingly, the adhesive force and appearance of the adhesive layer may be maintained even in a high-temperature situation.

According to the present invention, when the contact angle of the adhesive layer is 100° or more and the wetting tension thereof is less than 30 mN/m, the adhesive layer may have sufficient electrolyte resistance, and accordingly, it is possible to prevent the adhesive film from being de-intercalated or from having deformed appearance even in a high-temperature or high-voltage situation.

The wetting tension may be appropriately adjusted by the type of an adhesive included in the adhesive layer, the type and amount of an additive, the surface treatment such as plasma treatment, or the surface roughness of the adhesive layer.

The adhesive layer may include a rubber-based resin. Specifically, the rubber-based resin may be one or more selected from the group consisting of natural rubber(polyisoprene), epoxidized natural rubber, polyisobutylene rubber, an epoxidized styrene block copolymer, an ethylene propylene diene monomer (EPDM), and a styrene-ethylene-butylene-styrene copolymer (SEBS). If the adhesive layer includes a rubber-based resin, the adhesive layer may have further improved hydrophobic properties, and thus, may have excellent electrolyte resistance.

The adhesive layer may have adhesive force of 200 gf/25 mm or greater. Specifically, the adhesive force of the adhesive layer may be 200 gf/25 mm or greater, 210 gf/25 mm or greater, 220 gf/25 mm or greater, 230 gf/25 mm or greater, 240 gf/25 mm or greater, 250 gf/25 mm or greater, 260 gf/25 mm or greater, 270 gf/25 mm or greater, 280 gf/2 5mm or greater, 290 gf/25 mm or greater, and may be 1,500 gf/25 mm or less, 1,400 gf/25 mm or less, 1,300 gf/25 mm or less, 1,200 gf/25 mm or less, 1,100 gf/25 mm or less, 1,000 gf/25 mm or less, 900 gf/25 mm or less, 800 gf/25 mm or less, 700 gf/25 mm or less, 600 gf/25 mm or less, 500 gf/25 mm or less, 400 gf/25 mm or less, or 300 gf/25 mm or less. For example, the adhesive force of the adhesive layer may be 200 gf/25 mm or greater, preferably 200 gf/25 mm to 1,500 gf/25 mm, more preferably 220 gf/25 mm to 1,000 gf/25 mm, and even more preferably 250 gf/25 mm to 500 gf/25 mm. If the above-described range is satisfied, the adhesive film is sufficiently firmly fixed to an adherend, thereby preventing the adhesive film from being easily de-intercalated, and a balance with the electrolyte resistance of the adhesive film may be achieved.

The adhesive force may be adjusted by the type of an adhesive constituting the adhesive layer, the degree of cross-linking, the type and content of an additive added to the adhesive layer, and the surface roughness and surface treatment of the adhesive layer.

Specifically, in order to adjust the adhesive force of the adhesive layer, the adhesive layer may include, as an additive, one or more selected from the group consisting of an inorganic filler such as a tackifier, a silane coupling agent, and nano silica, and an organic filler such as an elastomer.

In this case, if the additive is a tackifier, the additive may be included in an amount of 1 wt% to 50 wt% based on the total weight of the adhesive layer, if the additive is a silane coupling agent, the additive may be included in an amount of 0.1 wt% to 2.0 wt% based on the total weight of the adhesive layer, if the additive is an inorganic filler, the additive may be included in an amount of 0.1 wt% to 10 wt% based on the total weight of the adhesive layer, and if the additive is an organic filler, the additive may be included in an amount of 0.1 wt% to 10 wt% based on the total weight of the adhesive layer.

Alternatively, in terms of adjusting the adhesive force of the adhesive layer, the surface roughness of the adhesive layer may be 0.01 $\mu$m to 2.0 $\mu$m based on arithmetic average roughness (Ra).

Alternatively, in order to adjust the adhesive force of the adhesive layer, the adhesive layer may be surface-treated by plasma treatment, flame treatment, or the like.

The adhesive layer may have electrolyte resistance adhesive force of 100 gf/25 mm or greater. Specifically, the electrolyte resistance adhesive force of the adhesive layer may be 100 gf/25 mm or greater, 110 gf/25 mm or greater, 120 gf/25 mm or greater, 130 gf/25 mm or greater, 140 gf/25 mm or greater, 150 gf/25 mm or greater, 160 gf/25 mm or greater, 170 gf/25 mm or greater, 180 gf/25 mm or greater, or 190 gf/25 mm or greater, and may be 1,500 gf/25 mm or less, 1,400 gf/25 mm or less, 1,300 gf/25 mm or less, 1,200 gf/25 mm or less, 1,100 gf/25 mm or less, 1,000 gf/25 mm or less, 900 gf/25 mm or less, 800 gf/25 mm or less, 700 gf/25 mm or less, 600 gf/25 mm or less, 500 gf/25 mm or less, 400 gf/25 mm or less, or 300 gf/25 mm or less. If the above-described range is satisfied, even when the electrolyte and the adhesive film are in contact with each other, the adhesive film may be fixed and positioned without being de-intercalated, so that the safety of a battery may be secured.

The electrolyte resistance adhesive force may be adjusted by the contact angle of the adhesive layer, the degree of cross-linking of an adhesive included in the adhesive layer, the surface treatment of the adhesive layer, the surface roughness thereof, and the like.

Meanwhile, the adhesive layer may have an electrolyte resistance index of 3 or less, preferably 0.2 to 2, and more preferably 0.5 to 1, as defined by Equation 1 below. The electrolyte resistance index refers to a value obtained by quantifying the degree to which the adhesive film may maintain the adhesive force and shape if contacting the electrolyte. If the electrolyte resistance index satisfies the above-described range, the adhesive film for a secondary battery according to the present invention may secure sufficient adhesive force even when in contact with an electrolyte, and the deformation of the shape thereof may be maximally suppressed, thereby reducing the appearance defect of a battery, so that the quality of the battery may be improved.

Electrolyte resistance index = (Adhesive force X 100°) / Electrolyte resistance adhesive force X contact angle)                    [Equation 1]

Meanwhile, the adhesive layer may have a thickness of 1 $\mu$m to 12 $\mu$m, preferably 2 $\mu$m to 12 $\mu$m, and more preferably 3 $\mu$m to 10 $\mu$m. If the above-described range is satisfied, the adhesive layer may secure sufficient adhesive force, and at the same time, may reduce degradation in energy density of a secondary battery.

Alternatively, according to an embodiment of the present invention, if the adhesive film is positioned on a welded portion to which an electrode lead of a secondary battery and an electrode tab thereof are connected, the adhesive layer may have a thickness of 3 $\mu$m to 12 $\mu$m, preferably 5 $\mu$m to 12 $\mu$m, and more preferably 8 $\mu$m to 10 $\mu$m. If the above-described range is satisfied, a bead in the welded portion may be sufficiently filled, so that a sealant layer may be sufficiently protected from the bead of the welded portion, and high adhesion may be obtained with respect to the welded portion.

According to another embodiment of the present invention, if the adhesive film is positioned on an outer circumferential surface of an electrode assembly of a secondary battery, the adhesive layer may have a thickness of 1 $\mu$m to 9 $\mu$m, preferably 1 $\mu$m to 7 $\mu$m, and more preferably 1 $\mu$m to 4 $\mu$m. If the above-described range is satisfied, the adhesive force of the adhesive layer may be sufficiently secured while firmly fixing the stacked electrode assembly.

According to yet another embodiment of the present invention, if the adhesive film is positioned on a folded region of a sealing portion of a battery case of a secondary battery, the adhesive layer may have a thickness of 1 $\mu$m to 9 $\mu$m, preferably 1 $\mu$m to 7 $\mu$m, and more preferably 1 $\mu$m to 4 $\mu$m. If the above-described range is satisfied, the sealing portion may be firmly fixed in a folded state, so that the energy density of the secondary battery may be improved.

**Lithium secondary battery**

A lithium secondary battery according to an embodiment of the present invention includes an electrode assembly including a positive electrode, a negative electrode, and a separator, an electrode tab extending and protruding from each electrode plate of the electrode assembly, an electrode lead connected to the electrode tab by welding, the above-described adhesive film, an electrolyte, and a battery case in which the electrode assembly is accommodated.

Hereinafter, each component of the lithium secondary battery according to the present invention will be described in more detail.

**(1) Battery case**

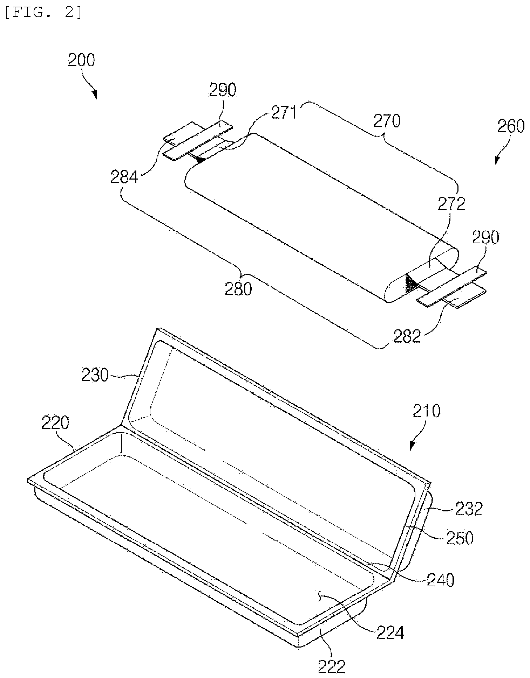

FIG. 2 is an exploded assembly view of a lithium secondary battery, which does not illustrate an adhesive film for a secondary battery according to the present invention.

Referring to FIG. 2, a battery case 210 according to the present invention may serve to accommodate an electrode assembly 260. In this case, the battery case may be applied in various ways depending on the shape, structure, and manufacturing method of the lithium secondary battery, and specifically, may be applied to a cylindrical shape, a prismatic shape, a pouch shape, or the like. Preferably, the battery case 210 according to the present invention may be a pouch-type case.

Referring to FIG. 2, the pouch-type battery case 210 may be manufactured by molding a pouch film laminate. The pouch-type battery case 210 may be sealed by accommodating the electrode assembly 260 thereinside and injecting an electrolyte thereinto.

The pouch film laminate may include a base layer, a gas barrier layer, and a sealant layer sequentially stacked, but is not limited thereto.

Specifically, the base layer is formed on the outermost layer of the pouch film laminate to protect the secondary battery from external friction and collision. The base layer may be made of a polymer to electrically insulate the electrode assembly from the outside.

The base layer may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and Teflon. Among the above, it is preferable that the base layer is made of polyethylene terephthalate (PET), nylon, or a combination thereof, which have wear resistance and heat resistance.

The gas barrier layer is stacked between the base layer and the sealant layer to secure mechanical strength of the pouch, block the entry of gas, moisture, or the like from the outside of the secondary battery, and prevent leakage of the electrolyte from the inside of the pouch-type battery case. The gas barrier layer may be formed of a metal. For example, the gas barrier layer may be a metal thin film including one or more metals selected from the group consisting of aluminum (Al), copper (Cu), stainless steel (SUS), nickel (Ni), titanium (Ti), and INVAR, but is not limited thereto.

The sealant layer is to completely seal the inside of the pouch-type battery case by being thermally adhered to each other at a sealing portion when the pouch-type battery case accommodating the electrode assembly thereinside is sealed. To this end, the sealant layer may be formed of a material having excellent thermal adhesion strength.

The sealant layer may be formed of a material having insulation properties, corrosion resistance properties, and sealing properties. Specifically, the sealant layer is in direct contact with the electrode assembly and/or the electrolyte inside the pouch-type battery case, and thus, may be formed of a material having insulation properties and corrosion resistance properties. In addition, the sealant layer is required to completely seal the inside of the pouch-type battery case, thereby blocking the movement of materials between the inside and the outside, and thus, may be formed of a material having high sealing properties (for example, excellent thermal adhesive strength). In order to secure the insulation properties, corrosion resistance properties, and sealing properties, the sealant layer may be formed of a polymer material.

The sealant layer may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and Teflon, and preferably, the sealant layer may be made of a polyolefinic resin such as polypropylene (PP) and/or polyethylene (PE). In this case, the polypropylene may be composed of cast polypropylene (CPP), acid-modified polypropylene (PPa), polypropylene-ethylene copolymer, and/or polypropylene-butylene-ethylene ternary copolymer.

The pouch film laminate body may be drawn-molded and stretched by a punch or the like to manufacture the pouch-type battery case 210. As a result, the pouch-type battery type case 210 may include a cup portion 222 and a receiving portion 224. The receiving portion 224 is a place for accommodating an electrode assembly, and may refer to an accommodation space formed in a pocket form inside the cup portion 222 as the cup portion 222 is formed.

According to an embodiment of the present invention, the pouch-type battery case 210 may include a first case 220 and a second case 230 as illustrated in FIG. 2. The first case 220 includes the receiving portion 224 capable of accommodating the electrode assembly 260, and the second case 230 may cover the receiving portion 224 from above such that the electrode assembly 260 is not separated out of the battery case 210. The first case 220 and the second case 230 may be manufactured with one side of each thereof connected to each other as illustrated in FIG. 2, but are not limited thereto, and may be manufactured in various ways, such as being separated from each other and manufactured separately.

According to another embodiment of the present invention, if a cup portion is molded in a pouch film laminate body, two symmetrical cup portions 222 and 232 may be drawn-molded to be adjacent to each other in one pouch film laminate body. In this case, the cup portions 222 and 232 may be respectively formed in the first case 220 and the second case 230 as illustrated in FIG. 2. After the electrode assembly 260 is accommodated in the receiving portion 224 provided in the cup portion 222 of the first case 220, a bridge portion 240 formed between the two cup portions 222 and 232 may be folded such that the two cup portions 222 and 232 face each other. In this case, the cup portion 232 of the second case 230 may accommodate the electrode assembly 260 from above. Therefore, since the two cup portions 222 and 232 accommodate one electrode assembly 260, a thicker electrode assembly 260 may be accommodated than when there is one cup portion 222. In addition, since one edge of the secondary battery 200 is formed by folding the pouch-type battery case 210, the number of edges to be sealed when a sealing process is performed later may be reduced. Accordingly, the process speed of the pouch-type secondary battery 200 may be improved, and the number of sealing processes may be reduced.

The pouch-type battery case 210 may be sealed while accommodating the electrode assembly 260 such that a portion of the electrode lead 280 to be described later, that is, a terminal portion, is exposed. Specifically, when the electrode lead 280 is connected to an electrode tab 270 of the electrode assembly 260, and an insulation part 290 is formed in a portion of the electrode lead 280, the electrode assembly 260 is accommodated in the receiving portion 224 provided in the cup portion 222 of the first case 220, and the second case 230 may cover the receiving portion 224 from above. Thereafter, an electrolyte may be injected into the receiving portion 224, and a sealing portion 250 formed on the edge of the first case 220 and the second case 230 may be sealed.

The sealing portion 250 may serve to seal the receiving portion 224. Specifically, the sealing portion 250 may seal the receiving portion 224 by being formed along the edge of the receiving portion 224. The temperature at which the sealing portion 250 is sealed may be 180 °C to 250 °C, specifically 200 °C to 250 °C, and more specifically 210 °C to 240 °C. If the sealing temperature satisfies the above-described numerical ranges, the pouch-type battery case 210 may secure sufficient sealing strength by thermal adhesion.

In this case, in order to secure energy density of the lithium secondary battery, the sealing portion may be formed by being folded in the direction of the receiving portion direction.

**(2) Electrode assembly**

An electrode assembly according to the present invention includes a positive electrode, a separator, and a negative electrode.

Referring to FIG. 2, the electrode assembly 260 may be inserted into the pouch-type battery case 210, and then sealed by the pouch-type battery case 210 after injecting an electrolyte thereto.

The electrode assembly 260 may be formed by sequentially stacking a positive electrode, a separator, and a negative electrode. Specifically, the electrode assembly 260 may include two types of electrodes, a positive electrode and a negative electrode, and a separator interposed between the electrodes to insulate the electrodes from each other.

The positive electrode and the negative electrode may each have a structure in which an active material slurry is applied to an electrode current collector in the form of metal foil or metal mesh including aluminum or copper. A slurry may typically be formed by stirring a granular active material, an auxiliary conductor, a binder, a conductive material, and the like in a state in which a solvent is added. The solvent may be removed in a subsequent process.

A slurry in which an electrode active material and a binder and/or a conductive material are mixed is applied to a positive electrode current collector and a negative electrode current collector to manufacture a positive electrode and a negative electrode, and the positive electrode and the negative electrode may be respectively laminated on both sides of a separator to manufacture the electrode assembly 260 in a predetermined shape. Types of the electrode assembly 260 may include a stack type, a jelly-roll type, a stack and fold type, and the like, but are not limited thereto.

**(3) Electrode tab**

An electrode tab according to the present invention may extend and protrude from an electrode plate of each electrode of the electrode assembly.

Referring to FIG. 2, the electrode tab 270 may be connected to each of the positive electrode and the negative electrode of the electrode assembly 260, and may protrude to the outside from the electrode assembly 260 to serve as a path through which electrons move between the inside and the outside of the electrode assembly 260. An electrode current collector included in the electrode assembly 260 may be composed of a portion to which an electrode active material is applied to and a terminal portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tab 270 may protrude in different directions from the electrode assembly 260, but is not limited thereto, and may protrude in various directions such as protruding side by side in the same direction from one side thereof.

**(4) Electrode lead**

Referring to FIG. 2, the electrode lead 280 may supply electricity to the outside of the secondary battery 200. The electrode lead 280 may be connected to the electrode tab 270 of the electrode assembly 260 by welding, and for example, may be connected by spot welding.

The electrode lead 280 may be connected to the electrode assembly 260 and protrude to the outside of the pouch-type battery case 210 via the sealing portion 250. Specifically, one end of the electrode lead 280 may be connected to the electrode assembly 260, to the electrode tab 270 in particular, and the other end of the electrode lead 280 may protrude to the outside of the pouch-type battery case 210.

The electrode lead 280 may include a positive electrode lead 282 having one end connected to a positive electrode tab 272 and extending in a direction in which the positive electrode tab 272 protrudes, and a negative electrode lead 284 having one end connected to a negative electrode tab 274 and extending in a direction in which the negative electrode tab 274 protrudes. Both the positive electrode lead 282 and the negative electrode lead 284 may protrude to the outside of the battery case 210. Therefore, electricity generated inside the electrode assembly 260 may be supplied to the outside. In addition, since the positive electrode tab 272 and the negative electrode tab 274 are each formed to protrude in various directions, the positive electrode lead 282 and the negative electrode lead 284 may also extend in various directions. The positive electrode lead 282 and the negative electrode lead 284 may be made of different materials. That is, the positive electrode lead 282 and the positive electrode current collector may be made of the same material, which is aluminum (Al), and the negative electrode lead 284 and the negative electrode current collector may be made of the same material, which is copper (Cu) or copper coated with nickel (Ni). A portion of the electrode lead 280 protruding to the outside of the battery case 210 may become a terminal portion and be electrically connected to an external terminal.

The electrode lead 280 may include the insulation part 190.

The insulation part 290 may prevent electricity generated from the electrode assembly 260 from flowing to the battery case 210 through the electrode lead 280, and may maintain the sealing of the battery case 210. To this end, the insulation part 290 may be formed of a non-conductor having non-conductivity that does not conduct electricity well. In general, as the insulation part 290, an insulation tape or film which is easily attached to the electrode lead 280 and relatively thin is often used, but the present invention is not limited thereto, and any member capable of insulating the electrode lead 280 may be used.

The insulation part 290 may be disposed to surround the outer circumferential surface of the electrode lead 280. Specifically, at least a portion of the electrode lead 280 may be surrounded by the insulation part 290. In this case, the insulation part 290 may be disposed between the electrode lead 280 and the pouch-type battery case 210. The insulation portion 290 may be positioned limited to the sealing portion 250 in which the first case 220 and the second case 230 of the pouch-type battery case 210 are thermally fused, and may adhere the electrode lead 280 to the battery case 210.

## (5) Electrolyte

As the electrolyte used in the present invention, various electrolytes usable in a lithium secondary battery may be used, such as an organic liquid electrolyte, an inorganic liquid electrolyte, a solid polymer electrolyte, a gel-type polymer electrolyte, a solid inorganic electrolyte, and a molten-type inorganic electrolyte, but the type thereof is not particularly limited.

Specifically, the electrolyte may include an organic solvent and a lithium salt.

Any organic solvent may be used as the organic solvent without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic C2 to C20 hydrocarbon group, and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, $LiPF_6$, $LiClO_4$, $LiAsF_6$, $LiBF_4$, $LiSbF_6$, $LiAlO4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$ may be used as the lithium salt. The lithium salt may be used in a concentration range of 0.1 to 5.0 M, preferably 0.1 M to 3.0 M. If the concentration of the lithium salt is included in the above-described range, the electrolyte has suitable conductivity and viscosity, and thus, may exhibit excellent electrolyte performance, and lithium ions may effectively move.

For purposes of improving the lifespan properties of a battery, suppressing the reduction in battery capacity, improving the discharge capacity of the battery, and the like, the electrolyte may additionally include an additive in addition to the above electrolyte components. For example, as the additive, a haloalkylene carbonate-based compound such as difluoroethylene carbonate or the like, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, aluminum trichloride, or the like may be used alone or in combination, but the additive is not limited thereto. The additive may be included in an amount of 0.1 wt% to 10 wt%, preferably 0.1 wt% to 5 wt%, based on the total weight of the electrolyte.

## (6) Additive film

Since the structure and components of the above adhesive film are the same as those described above, a detailed description thereof will be omitted.

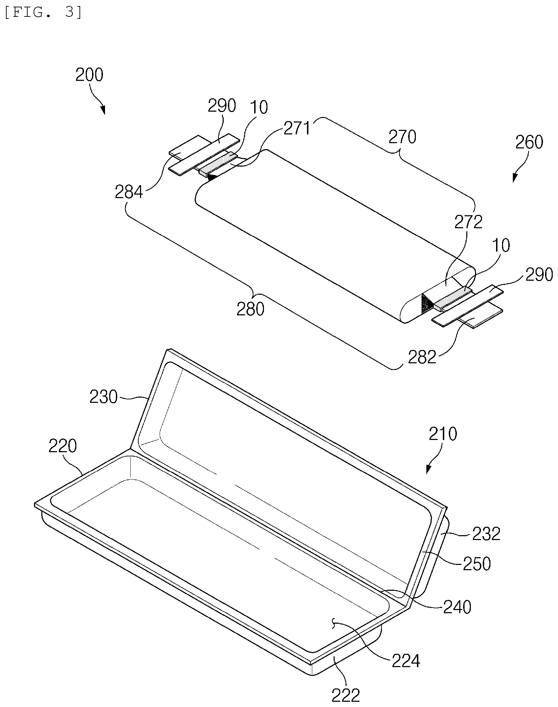

FIG. 3 is an exploded assembly view showing a lithium secondary battery according to an embodiment of the present invention.

Referring to FIG. 3, the adhesive film 10 for a secondary battery may be positioned on a welded portion to which the electrode lead 280 and the electrode tab 270 are connected. In this case, since the adhesive film is positioned on the welded portion, it is possible to prevent a sealant layer, a separator, or an electrode of a pouch film from being damaged by the bead formed in the welded portion, and as a result, it is possible to prevent degradation in insulation properties of the battery case.

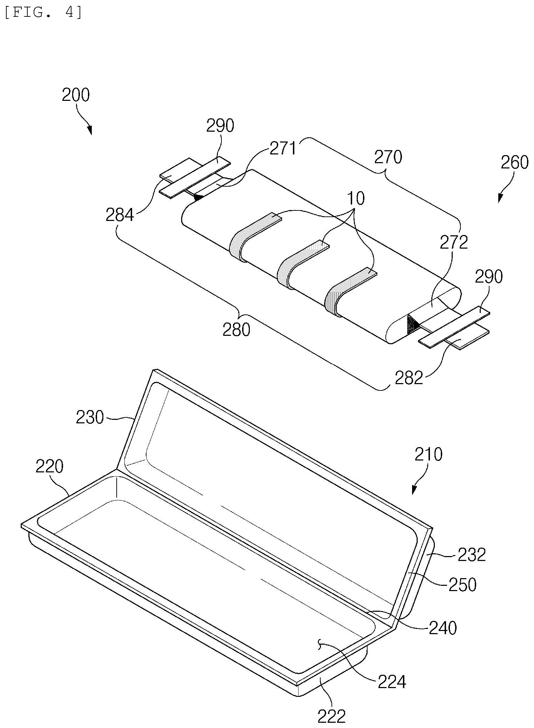

FIG. 4 is an exploded assembly view showing a lithium battery according to another embodiment of the present invention.

Referring to FIG. 4, the adhesive film 10 for a secondary battery may be positioned on an outer circumferential surface of the electrode assembly 260. In this case, if the adhesive film 10 is positioned on the outer circumferential surface of the electrode assembly 260, it is possible to prevent the secondary battery from being damaged due to collision, and it is possible to prevent short circuit from occurring due to a mismatch between a positive electrode and a negative electrode.

FIG. 5 is a perspective view showing a lithium battery according to yet another embodiment of the present invention.

Referring to FIG. 5, the adhesive film 10 for a secondary battery may be positioned in a folded region of a sealing portion 20 of the battery case 210. If the adhesive film is positioned on the folded region of the sealing portion, an edge of the sealing portion is fixed in a folded state, so that energy density of the secondary battery may be increased, and a vent pressure may be improved.

However, the adhesive film for a secondary battery is not limited to the above-described position.

Hereinafter, embodiments of the present invention will be described in detail so that those skilled in the art may easily carry out the present invention. However, the present invention may be embodied in many different forms, and is not limited to the embodiments set forth herein.

<Adhesive film for welding protection>

**Example 1**

A 7 $\mu$m-thick natural rubber (polyisoprene) film was laminated on one surface of a 40 $\mu$m-thick casting polypropylene film to prepare an adhesive film for a secondary battery.

Here, the casting polypropylene film is an outer insulation layer and the natural rubber film is an adhesive layer.

**Example 2**

A 7 $\mu$m-thick natural rubber (polyisoprene) film was laminated on one surface of a 60 $\mu$m-thick casting polypropylene film to prepare an adhesive film for a secondary battery.

Here, the casting polypropylene film is an outer insulation layer and the natural rubber film is an adhesive layer.

**Example 3**

A 10 $\mu$m-thick natural rubber (polyisoprene) film was laminated on one surface of a 100 $\mu$m-thick casting polypropylene film to prepare an adhesive film for a secondary battery.

Here, the casting polypropylene film is an outer insulation layer and the natural rubber film is an adhesive layer.

**Example 4**

A 7 $\mu$m-thick polyisobutylene film was laminated on one surface of a 60 $\mu$m-thick casting polypropylene film to prepare an adhesive film for a secondary battery.

Here, the casting polypropylene film is an outer insulation layer and the polypropylene film is an adhesive layer.

**Example 5**

A 7 $\mu$m-thick ethylene propylene diene monomer rubber (EPDM) film was laminated on one surface of a 60 $\mu$m-thick casting polypropylene film to prepare an adhesive film for a secondary battery.

Here, the casting polypropylene film is an outer insulation layer and the ethylene propylene diene monomer rubber film is an adhesive layer.

**Comparative Example 1**

A 7 $\mu$m-thick polystyrene copolymer film was laminated on one surface of a 60 $\mu$m-thick casting polypropylene film to prepare an adhesive film for a secondary battery.

Here, the casting polypropylene film is an outer insulation layer and the polystyrene copolymer film is an adhesive layer.

**Comparative Example 2**

A 7 $\mu$m-thick acrylonitrile butadiene styrene (ABS) film was laminated on one surface of a 60 $\mu$m-thick casting polypropylene film to prepare an adhesive film for a secondary battery.

Here, the casting polypropylene film is an outer insulation layer and the acrylonitrile butadiene styrene film is an adhesive layer.

**Comparative Example 3**

A 7 μm-thick acrylic copolymer film was laminated on one surface of a 60 μm-thick casting polypropylene film to prepare an adhesive film for a secondary battery.
Here, the casting polypropylene film is an outer insulation layer and the acrylonitrile butadiene styrene film is an adhesive layer.

<Adhesive film for battery fixing>

**Example 6**

A 3 μm-thick natural rubber (polyisoprene) film was laminated on one surface of a 20 μm-thick polyethylene terephthalate (PET) film to prepare an adhesive film for a secondary battery.
Here, the polyethylene terephthalate film is an outer insulation layer and the natural rubber film is an adhesive layer.

**Example 7**

A 3 μm-thick natural rubber (polyisoprene) film was laminated on one surface of a 17 μm-thick polyethylene terephthalate (PET) film to prepare an adhesive film for a secondary battery.
Here, the casting polypropylene film is an outer insulation layer and the natural rubber film is an adhesive layer.

**Comparative Example 4**

A 3 μm-thick natural rubber (polyisoprene) film was laminated on one surface of a 20 μm-thick polyethylene terephthalate (PET) film to prepare an adhesive film for a secondary battery. In this case, the natural rubber film was prepared by adding a silane coupling agent (vinyltrimethoxysilane) to natural rubber.
Here, the polyethylene terephthalate film is an outer insulation layer, and the natural rubber film is an adhesive layer.

**Comparative Example 5**

A 3 μm-thick natural rubber (polyisoprene) film was laminated on one surface of a 20 μm-thick polyethylene terephthalate (PET) film to prepare an adhesive film for a secondary battery. In this case, the natural rubber film was prepared by performing plasma surface-treatment on natural rubber.
Here, the polyethylene terephthalate film is an outer insulation layer, and the natural rubber film is an adhesive layer.

**Comparative Example 6**

A 5 μm-thick acrylic copolymer film was laminated on one surface of a 17 μm-thick polyethylene terephthalate (PET) film to prepare an adhesive film for a secondary battery.
Here, the polyethylene terephthalate film is an outer insulation layer, and the acrylic copolymer film is an adhesive layer.

**Experimental Example 1: Measurement of adhesive layer contact angle, adhesive force, electrolyte resistance adhesive force, and electrolyte resistance index**

1) Measurement of contact angle of adhesive layer

Using Phoenix mt of SEO Corporation, one drop of distilled water was added dropwise to an adhesive layer of the adhesive layer prepared in each of Examples 1 to 7 and Comparative Examples 1 to 6 at room temperature (25 °C), and then, within 5 seconds, an angle formed between the surface and the interface of the water droplet was measured. The results are shown in Table 1 below.

2) Measurement of adhesive force of adhesive layer

The adhesive film prepared in each of Examples 1 to 7 and Comparative Examples 1 to 6 was cut to a size of 25 mm×150 mm. In the cut adhesive film, a surface opposite to a surface in contact with an outer insulation layer of an adhesive layer was pressed onto a SUS304 substrate by using a 2 kg roller. Thereafter, the adhesive film was peeled at a peeling rate of 300 mm/min and a peeling angle of 180° at 25 °C, at which time, adhesive force was measured using ASTM D 3330. The measurement results are shown in Table 1 below.

3) Measurement of electrolyte resistance adhesive force of adhesive layer

The adhesive film prepared in each of Examples 1 to 7 and Comparative Examples 1 to 6 was cut to a size of 25 mm×150 mm. The cut adhesive film was immersed in an electrolyte, and then stored at 60 °C for 24 hours. Thereafter, the immersed adhesive film was taken out, and a surface opposite to a surface in contact with an outer insulation layer of an adhesive layer was pressed onto a SUS304 substrate by using a 2 kg roller. Thereafter, the adhesive film was peeled at a peeling rate of 300 mm/min and a peeling angle of 180° at 25 °C, at which time, adhesive force was measured using ASTM D 3330. The measurement results are shown in Table 1 below.

4) Measurement of electrolyte resistance index

Using the contact angle, the adhesive force, and the electrolyte resistance of the adhesive film prepared in each of Examples 1 to 7 and Comparative Examples 1 to 6 measured above, an electrolyte resistance index defined by Equation 1 below was measured. The measurement results are shown in Table 1 below.

Electrolyte resistance index = (Adhesive force X 100°) / Electrolyte resistance adhesive force X contact angle)　　　　[Equation 1]

5) Measurement of wetting tension

The wetting tension of the adhesive layer in the adhesive film prepared in each of Examples 1 to 7 and Comparative Examples 1 to 6 was measured according to a method in accordance with JIS K 6768:1999. Specifically, a solution was applied on the surface of the adhesive layer according to a method in accordance with JIS K 6768:1999, and then a state in which the solution spread or was formed on the surface was observed to measure a tensile value of the highest surface of the surface of the adhesive layer, on which the solution uniformly spread for 2 seconds or more, as the wetting tension of the adhesive layer by using Phoenix mt of SEO Co. The measurement results are shown in Table 1 below.

[Table 1]

|  | Adhesive layer contact angle [°] | Adhesive force [gf/25mm] | Electroly te resistanc e adhesive force [gf/25mm] | Electroly te resistanc e index | Wetting tension [mN/m] |
|---|---|---|---|---|---|
| Example 1 | 120 | 290 | 300 | 0.806 | 20 |
| Example 2 | 120 | 310 | 320 | 0.807 | 20 |
| Example 3 | 120 | 350 | 360 | 0.810 | 20 |
| Example 4 | 112 | 330 | 320 | 0.921 | 27 |
| Example 5 | 101 | 360 | 350 | 1.018 | 26 |
| Example 6 | 120 | 400 | 490 | 0.680 | 22 |
| Example 7 | 120 | 420 | 520 | 0.673 | 21 |
| Comparative Example 1 | 92 | 500 | 180 | 3.019 | 34 |
| Comparative Example 2 | 81 | 700 | 150 | 5.761 | 38.5 |
| Comparative Example 3 | 70 | 1050 | 16 | 93.750 | 41 |
| Comparative Example 4 | 90 | 550 | 150 | 4.074 | 32 |
| Comparative Example 5 | 70 | 500 | 50 | 14.286 | 38 |

(continued)

| | Adhesive layer contact angle [°] | Adhesive force [gf/25mm] | Electroly te resistanc e adhesive force [gf/25mm] | Electroly te resistanc e index | Wetting tension [mN/m] |
|---|---|---|---|---|---|
| Comparative Example 6 | 70 | 700 | 28 | 35.714 | 42 |

Referring to Table 2 above, it can be confirmed that the adhesive film prepared in each of Examples 1 to 7, in which the adhesive layer had a contact angle of 100° or more and wetting tension of less than 30 mN/m, maintained adhesive force to a predetermined level or above even after being immersed in the electrolyte at a high temperature for 24 hours, but the adhesive film prepared in each of Comparative Examples 1 to 6, in which the adhesive layer had a contact angle of 100° or less and wetting tension of 30 mN/m or greater, had significantly reduced adhesive force of the adhesive layer after being immersed in the electrolyte at a high temperature for 24 hours.

**Experimental Example 2: Evaluation of de-intercalation and wrinkle generation of adhesive film**

1) Evaluation of de-intercalation of adhesive film for welding protection

A positive electrode, a negative electrode, and a porous polyethylene separator were assembled in a stacking manner, and then laminated to manufacture an electrode assembly. Thereafter, an electrode lead was welded to an electrode tab protruding from each of the positive electrode and the negative electrode of the electrode assembly.

Thereafter, the adhesive films prepared in each of Examples 1 to 5 and Comparative Examples 1 to 3 was attached to a welded portion of the electrode tab and the electrode lead, and an electrolyte and the electrode assembly were accommodated in a pouch-type battery case, and then sealed to manufacture a pouch-type lithium secondary battery. In this case, as the electrolyte, an electrolyte prepared by adding 1.0 M of $LiPF_6$ to a solvent in which ethylene carbonate:ethylmethyl carbonate:dimethyl carbonate were mixed at a volume ratio of 3:3:4 was used.

The pouch-type lithium secondary batteries manufactured by including the adhesive films prepared in Examples 1 to 5 and Comparative Examples 1 to 3 were stored at 60 °C for 24 hours. Thereafter, each of the pouch-type lithium secondary batteries was disassembled, and was observed with the naked eye whether the adhesive films prepared in Examples 1 to 7 and Comparative Examples 1 to 3 were de-intercalated or not. The results are shown in Table 2 below.

O: Adhesive film was de-intercalated.
X: Adhesive film was not de-intercalated.

2) Evaluation of wrinkle generation of adhesive film for battery fixing

A positive electrode, a negative electrode, and a porous polyethylene separator were assembled in a stacking manner, and then laminated to manufacture an electrode assembly. Thereafter, an electrode lead was welded to an electrode tab protruding from each of the positive electrode and the negative electrode of the electrode assembly.

Thereafter, the adhesive films prepared in each of Examples 6 and 7 and Comparative Examples 4 to 6 were attached to a welded portion of the electrode tab and the electrode lead, and an electrolyte and the electrode assembly were accommodated in a pouch-type battery case, and then sealed to manufacture a pouch-type lithium secondary battery. In this case, as the electrolyte, an electrolyte prepared by adding 1.0 M of $LiPF_6$ to a solvent in which ethylene carbonate:ethylmethyl carbonate:dimethyl carbonate were mixed at a volume ratio of 3:3:4 was used.

The pouch-type lithium secondary batteries manufactured by including the adhesive films prepared in Examples 6 and 7 and Comparative Examples 4 to 6 were stored at 60 °C for 24 hours. Thereafter, each of the pouch-type lithium secondary batteries was disassembled, and was observed with the naked eye whether the adhesive films prepared in Examples 1 to 7 and Comparative Examples 1 to 3 were wrinkled or not. The results are shown in Table 2 below.

O: Adhesive film was wrinkled.
X: Adhesive film was not wrinkled.

[Table 2]

| | Whether adhesive film was de-intercalated | Whether adhesive film was wrinkled |
|---|---|---|
| Example 1 | X | - |

(continued)

|  | Whether adhesive film was de-intercalated | Whether adhesive film was wrinkled |
|---|---|---|
| Example 2 | X | - |
| Example 3 | X | - |
| Example 4 | X | - |
| Example 5 | X | - |
| Example 6 | - | X |
| Example 7 | - | X |
| Comparative Example 1 | O | - |
| Comparative Example 2 | O | - |
| Comparative Example 3 | O | - |
| Comparative Example 4 | - | O |
| Comparative Example 5 | - | O |
| Comparative Example 6 | - | O |

Referring to Table 2 above, it can be confirmed that the adhesive film prepared in each of Examples 1 to 5 was not de-intercalated in a high-temperature environment of 60 °C even when used as an adhesive film for welding protection when manufacturing of a lithium secondary battery, but the adhesive film prepared in each of Comparative Examples 1 to 3 was de-intercalated when used as an adhesive film for welding protection when manufacturing a lithium secondary battery. In addition, it can be confirmed that the adhesive film prepared in each of Examples 6 and 7 was not wrinkled in a high-temperature environment of 60 °C even when used as an adhesive film for battery fixing when manufacturing of a lithium secondary battery, but the adhesive film prepared in each of Comparative Examples 4 and 6 was wrinkled in a high-temperature environment of 60 °C when used as an adhesive film for battery fixing when manufacturing a lithium secondary battery. As a result, it can be understood that the adhesive film prepared in each of Examples 1 to 7 has excellent electrolyte resistance, and thus, has excellent functions in a high-temperature environment of 60 °C as adhesive tape for welding protection or battery fixing.

(Description of the Reference Numerals or Symbols)

10: Adhesive film
11: Outer insulation layer
12: Adhesive layer
100: Pouch film laminate body
200: Pouch-type secondary battery
210: Pouch-type case
220: First case
222: Cup portion
224: Receiving portion
230: Second case
232: Cup portion
240: Bridge portion
250: Sealing portion
260: Electrode assembly
270: Electrode tab
272: Positive electrode tab
274: Negative electrode tab
280: Electrode lead
282: Positive electrode lead
284: Negative electrode lead
290: Insulation part

**Claims**

1. An adhesive film for a secondary battery, the adhesive film comprising:

   an outer insulation layer; and an adhesive layer positioned on one surface of the outer insulation layer, wherein:
   the adhesive layer has a contact angle of 100° or more; and
   the adhesive layer has a wetting tension of less than 30 mN/m.

2. The adhesive film of claim 1, wherein the adhesive layer comprises a rubber-based resin.

3. The adhesive film of claim 2, wherein the rubber-based resin is one or more selected from the group consisting of natural rubber, epoxidized natural rubber, polyisobutylene rubber, an epoxidized styrene block copolymer, ethylene propylene diene monomer rubber, and a styrene-ethylenebutylene-styrene copolymer.

4. The adhesive film of claim 1, wherein the outer insulation layer is one or more selected from the group consisting of polyethylene terephthalate, polyethylene naphthalate, polyimide, casting polypropylene, high-density polyethylene, and low-density polyethylene.

5. The adhesive film of claim 1, wherein the adhesive layer has adhesive force of 200 gf/25 mm or greater.

6. The adhesive film of claim 1, wherein the adhesive layer has electrolyte resistance adhesive force of 100 gf/25 mm or greater.

7. The adhesive film of claim 1, wherein the adhesive layer has an electrolyte resistance index of 3 or less, as defined by Equation 1 below:

   Electrolyte resistance index = (Adhesive force X 100°) / Electrolyte resistance adhesive force X contact angle).    [Equation 1]

8. A lithium secondary battery comprising:

   an electrode assembly including a positive electrode, a negative electrode, and a separator;
   an electrode tab extending and protruding from each electrode plate of the electrode assembly;
   an electrode lead connected to the electrode tab by welding;
   the adhesive film for a secondary battery according to any one of claim 1 to claim 7;
   an electrolyte; and
   a battery case in which the electrode assembly and the electrolyte are accommodated.

9. The lithium secondary battery of claim 8, wherein the adhesive film for a secondary battery is positioned on a welded portion to which the electrode lead and the electrode tab are connected.

10. The lithium secondary battery of claim 8, wherein the adhesive film for a secondary battery is positioned on an outer circumferential surface of the electrode assembly.

11. The lithium secondary battery of claim 8, wherein the adhesive film is positioned on a folded region of a sealing portion of the battery case.

12. The lithium secondary battery of claim 8, wherein the battery case is a pouch-type battery case.

[FIG. 1]

10

12

11

[FIG. 2]

[FIG. 3]

[FIG. 4]

## INTERNATIONAL SEARCH REPORT

| International application No. |
|---|
| **PCT/KR2024/020860** |

| A. | CLASSIFICATION OF SUBJECT MATTER |
|---|---|

**C09J 7/38**(2018.01)i; **C09J 7/24**(2018.01)i; **C09J 107/00**(2006.01)i; **H01M 50/595**(2021.01)i; **H01M 50/105**(2021.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

C09J 7/38(2018.01); C09J 109/00(2006.01); C09J 201/00(2006.01); H01M 2/34(2006.01); H01M 50/10(2021.01); H01M 50/172(2021.01); H01M 50/178(2021.01); H01M 50/197(2021.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 접착(cohesion), 접착(adhesion), 층(layer), 필름(film), 고무계 수지(rubber-based resin), 이차전지(secondary battery), 전극(electrode)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 6770583 B2 (TERAOKA SEISAKUSHO:KK) 14 October 2020 (2020-10-14)<br>See claims 1, 3, 4 and 7, and paragraphs [0012] and [0038]. | 1-7 |
| Y | | 8-12 |
| Y | KR 10-2023-0048764 A (SAMSUNG SDI CO., LTD.) 12 April 2023 (2023-04-12)<br>See claims 1 and 10, paragraph [0016], and figures 1 and 3. | 8-12 |
| A | JP 2019-145331 A (TDK CORP.) 29 August 2019 (2019-08-29)<br>See claims 1 and 3. | 1-12 |
| A | KR 10-2023-0011575 A (A2B2 CORPORATION) 25 January 2023 (2023-01-25)<br>See claim 1, and paragraphs [0004]-[0006]. | 1-12 |
| A | KR 10-2022-0017058 A (SK ON CO., LTD.) 11 February 2022 (2022-02-11)<br>See claim 1. | 1-12 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 763 936 A1

**INTERNATIONAL SEARCH REPORT**
**Information on patent family members**

International application No.

**PCT/KR2024/020860**

| Patent document cited in search report | | | Publication date (day/month/year) | Patent family member(s) | | | Publication date (day/month/year) |
|---|---|---|---|---|---|---|---|
| JP | 6770583 | B2 | 14 October 2020 | CN | 110023434 | A | 16 July 2019 |
| | | | | CN | 110023434 | B | 26 October 2021 |
| | | | | KR | 10-2019-0082910 | A | 10 July 2019 |
| | | | | KR | 10-2313964 | B1 | 18 October 2021 |
| | | | | US | 2020-0040226 | A1 | 06 February 2020 |
| | | | | WO | 2018-096581 | A1 | 17 October 2019 |
| | | | | WO | 2018-096581 | A1 | 31 May 2018 |
| KR | 10-2023-0048764 | A | 12 April 2023 | CN | 115939684 | A | 07 April 2023 |
| | | | | EP | 4164051 | A1 | 12 April 2023 |
| | | | | KR | 10-2733272 | B1 | 25 November 2024 |
| | | | | US | 2023-0108088 | A1 | 06 April 2023 |
| JP | 2019-145331 | A | 29 August 2019 | JP | 7020167 | B2 | 16 February 2022 |
| KR | 10-2023-0011575 | A | 25 January 2023 | KR | 10-2645030 | B1 | 07 March 2024 |
| KR | 10-2022-0017058 | A | 11 February 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230190231